# EUROPÄISCHE PATENTSCHRIFT

(11) **EP 3 359 852 B1**
(45) Veröffentlichungstag und Bekanntmachung des Hinweises auf die Patenterteilung: **05.02.2020**
(21) Anmeldenummer: 16781060.5
(22) Anmeldetag: 21.09.2016
(51) Int. Cl.: F16K 31/10, F16K 11/14, F16K 31/06

(54) **PNEUMATISCHES MAGNETVENTIL**
PNEUMATIC SOLENOID VALVE
ÉLECTROVANNE PNEUMATIQUE

(30) Priorität: 05.10.2015 DE 102015219197
(43) Veröffentlichungstag der Anmeldung: 15.08.2018
(73) Patentinhaber: Conti Temic microelectronic GmbH, 90411 Nürnberg (DE)
(72) Erfinder: BEUSCHEL, Michael, 85134 Stammham (DE); BAUER, Stefan, 85290 Engelbrechtsmünster (DE); FERNENGEL, Holger, 85057 Ingolstadt (DE); KERLER, Alexander, 85135 Titting OT Petersbuch (DE); KOLBINGER, Martin, 93339 Riedenburg / Buch (DE)
(74) Vertreter: Bonn, Roman Klemens
(86) Internationale Anmeldenummer: PCT/EP2016/072370
(87) Internationale Veröffentlichungsnummer: WO 2017/060082

(56) Entgegenhaltungen:
- DE-A1-102005 035 449
- US-A- 5 687 765

## Beschreibung

Die Erfindung betrifft ein pneumatisches Magnetventil.

In einer Vielzahl von technischen Anwendungsgebieten werden zur Steuerung von Luftströmen pneumatische Magnetventile verwendet. In diesen Magnetventilen wird mittels einer Magnetspule eine Magnetkraft erzeugt und hierdurch ein Schaltvorgang des Ventils ausgelöst. Ein Anwendungsbereich solcher Magnetventile ist die Befüllung von elastischen Luftblasen in einer Vorrichtung zur pneumatischen Verstellung eines Sitzes in einem Verkehrsmittel, wie z.B. eines Kraftfahrzeugsitzes.

Aus dem Dokument DE 10 2008 060 342 B3 ist eine Ventilanordnung mit gemeinsamen Wicklungs- und Ventildüsenträger für zwei Magnetventile bekannt. Ferner zeigt das Dokument WO 2013/011340 A1 eine Ventilanordnung mit Wicklungen im druckbeaufschlagten Ventilraum.

Die Druckschrift DE 10 2009 033 585 A1 offenbart ein elektromagnetisches Ventil mit Permanentmagnet, Tauchspule und mehreren Wippen, welches bei Bestromung in zwei Polaritätsrichtungen jeweils unterschiedliche Teilventile öffnet. Im unbestromten Zustand sind beide Teilventile geschlossen. Für die Betätigung des Ventils ist eine Umpolung der Versorgungsspannung erforderlich.

Aus dem Dokument DE 10 2005 035449 A1 ist ein Fahrzeugbremsanlagen-Magnetventilanordnung bekannt, welche als Drei-Stellungs-Drei-Wegeventil gestaltet ist und einen elektromagnetisch bewegbaren Anker aufweist, dem ein mit dem Anker betätigbares erstes Ventil zugeordnet ist. Es ist ferner ein Stellelement vorgesehen, mit dem ein zweites Ventil betätigbar ist und welches zum Betätigen des zweiten Ventils mit dem Anker des ersten Ventils bewegbar ist.

Aus dem Dokument US 5 687 765 A ist ein Drei-Stellungs-Drei-Wege-Magnetventil für ein Antiblockiersystem bekannt. Das Magnetventil weist ein zylindrisches Gehäuse und zwei Abdeckungen auf, die mit beiden Enden des Gehäuses hermetisch gekoppelt sind. Das Gehäuse und die zwei Abdeckungen definieren eine innere Kammer, die durch eine Barriere in erste und zweite Kammern unterteilt ist, und erste bis dritte Öffnungen stehen mit der ersten Kammer in Verbindung.

Aufgabe der Erfindung ist es, ein pneumatisches Magnetventil zu schaffen, mit dem auf einfache Weise drei Schaltstellungen realisiert werden können.

Diese Aufgabe wird durch das Magnetventil gemäß Patentanspruch 1 gelöst. Weiterbildungen der Erfindung sind in den abhängigen Ansprüchen definiert.

Das erfindungsgemäße pneumatische Magnetventil umfasst einen elektromagnetischen Aktor und eine Luftkammer (Ventilraum), an der mehrere Luftanschlüsse vorgesehen sind, welche über mehrere Schaltstellungen des magnetischen Aktors unter Zwischenschaltung der Luftkammer verschaltbar sind. Vorzugsweise ist der elektromagnetische Aktor innerhalb der Luftkammer angeordnet, um eine effiziente Kühlung des Aktors über Luftströme in der Luftkammer zu erreichen. Vorzugsweise ist auch der weiter unten beschriebene Betätigungsmechanismus innerhalb dieser Luftkammer angeordnet.

Hier und im Folgenden ist unter einem elektromagnetischen Aktor ein Betätigungselement zu verstehen, welches elektrische Energie (d.h. dem Aktor zugeführten Strom) in eine magnetische Kraft umsetzt, über welche die Betätigung des Aktors ausgeführt wird. In der Regel umfasst ein elektromagnetischer Aktor eine Magnetspule, welche über Bestromung die Betätigung des Aktors bewirkt.

Der elektromagnetische Aktor des erfindungsgemäßen Magnetventils kann (zumindest) drei unterschiedliche Schaltstellungen durch eine unipolare Bestromung des Aktors (insbesondere einer Magnetspule des Aktors) mit drei unterschiedlichen Stromstärken einnehmen, wobei der Aktor ggf. auch noch weitere Schaltstellungen aufweisen kann. In einer bevorzugten Variante entspricht eine Stromstärke dabei dem Strom Null. Eine unipolare Bestromung mit drei unterschiedlichen Stromstärken ist somit derart zu verstehen, dass die Bestromung bei zwei Stromstärken mit gleicher Stromrichtung ungleich Null erfolgt, wohingegen die Bestromung bei der dritten Stromstärke entweder die gleiche Stromrichtung wie die Bestromung bei der ersten und zweiten Stromstärke aufweist oder auf Null gesetzt ist.

In einer ersten Schaltstellung des elektromagnetischen Aktors verschließt ein erstes Dichtelement einen ersten Luftanschluss und ein zweites Dichtelement gibt einen zweiten Luftanschluss frei (d.h. der zweite Luftanschluss ist geöffnet). In einer zweiten Schaltstellung des elektromagnetischen Aktors verschließt sowohl das erste Dichtelement den ersten Luftanschluss als auch das zweite Dichtelement den zweiten Luftanschluss. In einer dritten Schaltstellung des Aktors gibt das erste Dichtelement den ersten Luftanschluss frei, wohingegen das zweite Dichtelement den zweiten Luftanschluss verschließt.

Zum Schließen und Öffnen des ersten und zweiten Luftanschlusses sind das erste und zweite Dichtelement durch den elektromagnetischen Aktor über einen mechanischen Betätigungsmechanismus und insbesondere einen Hebelmechanismus bewegbar. Der Betätigungsmechanismus ist derart ausgestaltet, dass beim Wechsel zwischen der ersten und zweiten Schaltstellung und beim Wechsel zwischen der zweiten und dritten Schaltstellung jeweils nur eines des ersten und zweiten Dichtelements bewegt wird.

Das erfindungsgemäße Magnetventil weist den Vorteil auf, dass nur ein einzelner Aktor zur Realisierung von drei Schaltstellungen benötigt wird. Ferner ist dieser Aktor auf einfache Weise durch eine unipolare Bestromung betätigbar. Mittels eines geeigneten Betätigungsmechanismus wird erreicht, dass die Dichtelemente beim Wechsel der Schaltstellungen unabhängig voneinander beweglich sind, wodurch ein einfacher und effizienter Übergang zwischen den Schaltstellungen gewährleistet wird.

Erfindungsgemäß ist der Betätigungsmechanismus als Hebelmechanismus ausgestaltet, der eine erste und eine zweite Wippe umfasst. An der ersten Wippe ist das erste Dichtelement angebracht und an der zweiten Wippe das zweite Dichtelement. Die erste Wippe ist zum Öffnen und Schließen des ersten Luftanschlusses verkippbar und die zweite Wippe ist zum Öffnen und Schließen des zweiten Luftanschlusses verkippbar. Der Betätigungsmechanismus ist dabei derart ausgestaltet, dass beim Verkippen einer der ersten und zweiten Wippe die andere der ersten und zweiten Wippe nicht verkippt wird.

Durch die Ausführung des Betätigungsmechanismus über zwei separate Wippen kann ein Öffnen und Verschließen der Luftanschlüsse mit geringer Kraft erreicht werden. Ferner können verschiedene Kraft- bzw. Wegübersetzungen realisiert werden, um gegebenenfalls unterschiedliche Dicht- bzw. Betätigungskräfte für die verschiedenen Luftanschlüsse zu erreichen.

In einer bevorzugten Ausführungsform verkippt der Betätigungsmechanismus beim Wechsel zwischen der ersten und zweiten Schaltstellung ausschließlich die zweite Wippe, während bei diesem Wechsel das erste Dichtelement den ersten Luftanschluss mittels einer auf die erste Wippe wirkenden elastischen Kraft geschlossen hält. Demgegenüber verkippt der Betätigungsmechanismus beim Wechsel zwischen der zweiten und dritten Schaltstellung ausschließlich die erste Wippe, während das zweite Dichtelement den zweiten Luftanschluss mittels einer auf die zweite Wippe wirkenden elastischen Kraft geschlossen hält. In der zweiten Schaltstellung nimmt der Betätigungsmechanismus eine Stellung derart ein, dass sowohl das erste Dichtelement als auch das zweite Dichtelement den jeweiligen ersten und zweiten Luftanschluss mittels einer auf die erste Wippe wirkenden elastischen Kraft und einer auf die zweite Wippe wirkenden elastischen Kraft geschlossen hält.

In einer besonders bevorzugten Variante der soeben beschriebenen Ausführungsform werden die auf die Wippen wirkenden elastischen Kräfte durch ein erstes elastisches Mittel und ein zweites elastisches Mittel erzeugt, wobei diese Mittel vorzugsweise als Federn und insbesondere als Spiralfedern ausgeführt sind. Das erste elastische Mittel drückt dabei die erste Wippe mit einer elastischen Kraft hin zu dem geschlossenen Zustand des ersten Luftanschlusses, wohingegen das zweite elastische Mittel die zweite Wippe mit einer elastischen Kraft hin zu dem geschlossenen Zustand des zweiten Luftanschlusses drückt.

In einer weiteren bevorzugten Variante des oben beschriebenen Wippenmechanismus sind ferner zumindest ein erster Vorsprung und zumindest ein zweiter Vorsprung vorgesehen. Der zumindest eine erste Vorsprung dient zum Verkippen der ersten Wippe mittels Kraftausübung auf ein Ende der ersten Wippe, um den ersten Luftanschluss gegen die auf die erste Wippe wirkende elastische Kraft zu öffnen. Demgegenüber dient der zumindest eine zweite Vorsprung zum Verkippen der zweiten Wippe mittels Kraftausübung auf ein Ende der zweiten Wippe, um den zweiten Luftanschluss gegen die auf die zweite Wippe wirkende elastische Kraft zu öffnen. Die Vorsprünge sind vorzugsweise an dem oben beschriebenen Anker angeordnet bzw. starr mit diesem Anker verbunden.

In einer besonders bevorzugten Ausführungsform umfasst der elektromagnetische Aktor einen Anker aus weichmagnetischem Material, der durch Bestromung einer Magnetspule bewegt wird und hierdurch auf den Betätigungsmechanismus zum Schließen und Öffnen des ersten und zweiten Luftanschlusses einwirkt. Vorzugsweise ist die Bewegung des Ankers dabei eine Drehung um eine Drehachse.

In einer weiteren bevorzugten Ausführungsform der Erfindung ist der elektromagnetische Aktor in der ersten Schaltstellung mit einer ersten Stromstärke und vorzugsweise mit der Stromstärke Null bestromt (d.h. er ist unbestromt), wohingegen der elektromagnetische Aktor in der zweiten Schaltstellung mit einer zweiten Stromstärke und in der dritten Schaltstellung mit einer dritten Stromstärke bestromt ist, wobei die dritte Stromstärke höher als die zweite Stromstärke ist und die zweite Stromstärke höher als die erste Stromstärke ist. Die geschlossene zweite Schaltstellung des Magnetventils, die in der Regel für einen längeren Zeitraum eingenommen wird, kann somit mit einer reduzierten zweiten Stromstärke und damit verminderter Verlustleistung erreicht werden. Hierdurch wird die Energieeffizienz des Magnetventils verbessert.

In einer weiteren bevorzugten Ausführungsform ist der erste Luftanschluss ein Zuluftanschluss für die Luftkammer und der zweite Luftanschluss ein Abluftanschluss für die Luftkammer oder umgekehrt. Vorzugweise ist in dem Magnetventil ferner ein Arbeitsanschluss zum Befüllen und/oder Entleeren einer pneumatischen Einheit, vorzugsweise einer Luftblase, vorgesehen. In einer bevorzugten Variante der soeben beschriebenen Ausführungsform sind der Zuluftanschluss und der Abluftanschluss einerseits und der Arbeitsanschluss andererseits an entgegengesetzten Enden der Luftkammer angeordnet, wodurch der Aktor besonders effizient gekühlt wird.

In einer weiteren, besonders bevorzugten Ausführungsform sind das erste und zweite Dichtelement durch den Betätigungsmechanismus um separate Kippachsen verkippbar. Mit anderen Worten ist das erste Dichtelement um eine andere Kippachse als das zweite Dichtelement verkippbar. Der Begriff der separaten Kippachsen ist dabei derart zu verstehen, dass die Verkippung um die eine Kippachse nicht an die Verkippung um die andere Kippachse gekoppelt ist. Vorzugsweise sind die Kippachsen an unterschiedlichen räumlichen Positionen angeordnet.

In einer weiteren Ausgestaltung des erfindungsgemäßen Magnetventils sind der erste Luftanschluss und der zweite Luftanschluss gegenüberliegend zueinander angeordnet und der Betätigungsmechanismus umfasst einen ersten Schenkel mit darauf angeordnetem ersten Dichtelement und einen zweiten Schenkel mit darauf angeordnetem zweiten Dichtelement, wobei der erste und zweite Schenkel zwischen dem ersten und zweiten Luftanschluss angeordnet sind und durch den elektromagnetischen Aktor verkippbar sind.

Der erste und zweite Schenkel sind mechanisch derart miteinander gekoppelt, dass in der ersten Schaltstellung das erste Dichtelement mittels einer auf den ersten Schenkel wirkenden elastischen Kraft den ersten Luftanschluss verschließt, wohingegen das zweite Dichtelement den zweiten Luftanschluss freigibt. Demgegenüber verschließt in der zweiten Schalt stellung sowohl das erste Dichtelement als auch das zweite Dichtelement den ersten bzw. zweiten Luftanschluss mittels einer auf den entsprechenden ersten bzw. zweiten Schenkel wirkenden elastischen Kraft. In der dritten Schaltstellung gibt das erste Dichtelement den ersten Luftanschluss frei, wohingegen das zweite Dichtelement mittels einer auf den zweiten Schenkel wirkenden elastischen Kraft den zweiten Luftanschluss verschließt.

Mit der soeben beschriebenen Variante kann ein einfach aufgebauter Betätigungsmechanismus mittels entsprechender Schenkel erreicht werden. Vorzugsweise sind die Schenkel an dem oben beschriebenen Anker angeordnet bzw. starr mit diesem Anker verbunden.

In einer besonders einfachen Variante der soeben beschriebenen Ausführungsform umfasst der Betätigungsmechanismus eine U-förmige Blattfeder, deren Schenkel den ersten und zweiten Schenkel bilden und welche zumindest teilweise und vorzugsweise ausschließlich die elastischen Kräfte in der ersten bis dritten Schaltstellung erzeugt.

Alternativ oder zusätzlich kann der Betätigungsmechanismus auch ein Federelement (z.B. eine Spiralfeder) umfassen, das zwischen dem ersten und zweiten Schenkel positioniert ist und zumindest teilweise und gegebenenfalls auch ausschließlich die elastischen Kräfte in der ersten bis dritten Schaltstellung erzeugt.

In einer weiteren bevorzugten Ausführungsform umfasst der Betätigungsmechanismus einen ersten Anschlag, der das Verkippen des ersten Schenkels bewirkt. Alternativ oder zusätzlich kann auch ein zweiter Anschlag vorgesehen sein, der das Verkippen des zweiten Schenkels bewirkt. Die Anschläge sind vorzugsweise wiederum an dem oben beschriebenen Anker angeordnet bzw. starr mit diesem Anker verbunden.

Das erfindungsgemäße Magnetventil ist vorzugsweise zum Befüllen und/oder Entleeren zumindest einer elastischen Luftblase in einer Vorrichtung zur pneumatischen Verstellung eines Sitzes in einem Verkehrsmittel vorgesehen. Mit anderen Worten umfasst die Erfindung auch eine Vorrichtung zur pneumatischen Verstellung eines Sitzes in einem Verkehrsmittel mit zumindest einer elastischen Luftblase sowie einem erfindungsgemäßen Magnetventil zum Befüllen und/oder Entleeren der zumindest einen Luftblase.

Ausführungsbeispiele der Erfindung werden nachfolgend anhand der beigefügten Figuren detailliert beschrieben.

Es zeigen:
- Fig. 1 bis Fig. 3: Schnittansichten eines Magnetventils gemäß einer ersten Ausführungsform der Erfindung in unterschiedlichen Schaltstellungen;
- Fig. 4: eine Draufsicht von oben auf das Magnetventil der Fig. 1;
- Fig. 5: eine Draufsicht auf den in dem Magnetventil der Fig. 1 verbauten Anker;
- Fig. 6: eine Draufsicht auf die in dem Magnetventil der Fig. 1 verbaute Blattfeder;
- Fig. 7: eine Draufsicht auf den im Magnetventil der Fig. 1 verbauten Clip;
- Fig. 8 bis Fig. 10: Schnittansichten eines Magnetventils gemäß einer zweiten Ausführungsform der Erfindung in unterschiedlichen Schaltstellungen; und
- Fig. 11 bis Fig. 13: Schnittansichten eines Magnetventils gemäß einer dritten Ausführungsform der Erfindung in unterschiedlichen Schaltstellungen.

Nachfolgend wird die Erfindung anhand von Ausführungsformen von 3/3-NO-Magnetventilen beschrieben, die zum Befüllen und Entlüften einer elastischen Luftblase (nicht gezeigt) in einer Vorrichtung zur pneumatischen Verstellung eines Kraftfahrzeugsitzes eingesetzt werden.

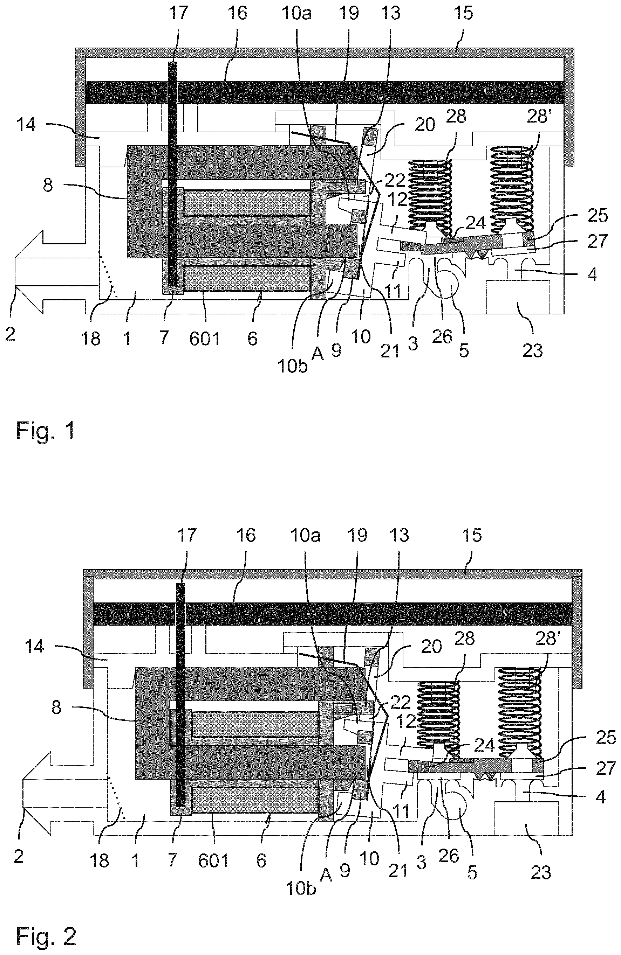

Fig. 1 zeigt ein Magnetventil gemäß einer ersten Ausführungsform der Erfindung. Das Magnetventil umfasst eine Luftkammer 1 mit entsprechenden Luftanschlüssen 2, 3 und 4. Die Oberseite der Luftkammer ist durch eine Abdeckplatte 14 luftdicht abgedeckt. Oberhalb der Abdeckplatte 14 befindet sich eine Leiterplatte 16, die wiederum mittels eines Deckels 15 abgedeckt ist.

Der Luftanschluss 2 der Luftkammer 1 führt hin zu der Luftblase und stellt den Arbeitsanschluss des Magnetventils dar. Die Befüllung der Luftblase erfolgt über eine Druckluftzufuhr (nicht gezeigt), die an dem Kanal 5 angeschlossen ist, der am Boden der Luftkammer 1 ausgebildet ist. Der Kanal 5 ist über den Zuluftanschluss (Zuluftöffnung) 3 mit der Luftkammer 1 verbunden ist. Zum Entlüften bzw. Ablassen von Druckluft aus der Luftblase wird der Abluftanschluss (Abluftöffnung) 4 genutzt, der wiederum am Boden der Luftkammer ausgebildet ist und unter Zwischenschaltung eines Dämpfungselements 23 aus Schaumstoff mit der Umgebung verbunden ist. Durch das Dämpfungselement werden die nach außen dringenden Geräusche des Ventils vermindert.

Innerhalb der Luftkammer 1 ist ein elektromagnetischer Aktor angeordnet, der über einen weiter unten näher beschriebenen Betätigungsmechanismus das Öffnen und Schließen des Zuluftanschlusses 3 und des Abluftanschlusses 4 bewirkt. Der Aktor umfasst eine Magnetspule 6 mit einer Wicklung 601, welche auf einem Spulenkörper 7 aufgewickelt ist. Ferner ist in der Luftkammer ein U-förmiges Joch 8 aus weichmagnetischem Material angeordnet, wobei sich der untere Schenkel des U-förmigen Jochs durch einen Hohlraum des Spulenkörpers 7 erstreckt. Der obere Schenkel des Jochs 8 läuft an der Wicklung 601 des Spulenkörpers vorbei und erstreckt sich durch eine Öffnung in einem oberen Fortsatz des Spulenkörpers 7.

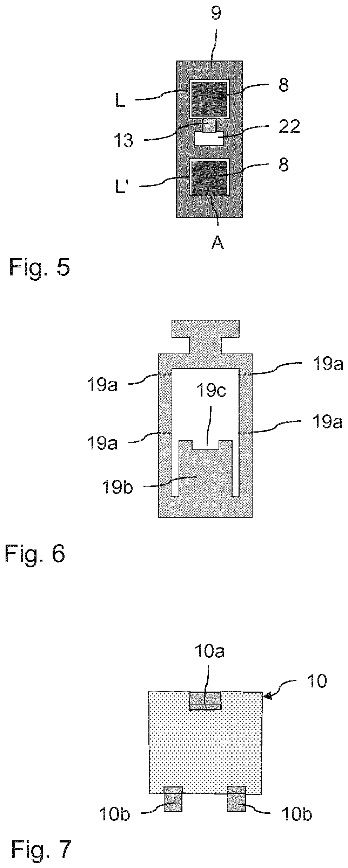

Innerhalb der Luftkammer 1 befindet sich ferner der im Schnitt gezeigte Anker 9, der aus weichmagnetischem Material besteht und bei Bestromung der Spule 6 mittels Magnetkraft um eine einzelne Drehachse A verdreht wird, wie weiter unten noch näher erläutert wird. In dem Anker sind Öffnungen ausgestanzt. Insbesondere umfasst der Anker eine obere Öffnung 20, eine daran anschließende T-förmige Öffnung 22 (siehe Fig. 5) sowie eine untere Öffnung 21. Die Öffnungen 20 und 21 sind quadratisch ausgestaltet (siehe Fig. 5) . Die untere Kante der Öffnung 21 liegt an dem unteren Schenkel des Jochs 8 an, wodurch eine Berührungslinie zwischen Joch und Anker gebildet wird, die auch die Drehachse A des Ankers 9 bei Bestromung der Spule 6 darstellt. An dem Anker 9 ist ein Clip 10 befestigt, aus dem mehrere Vorsprünge 11 und 12 hervorstehen, deren Funktion weiter unten näher erläutert wird.

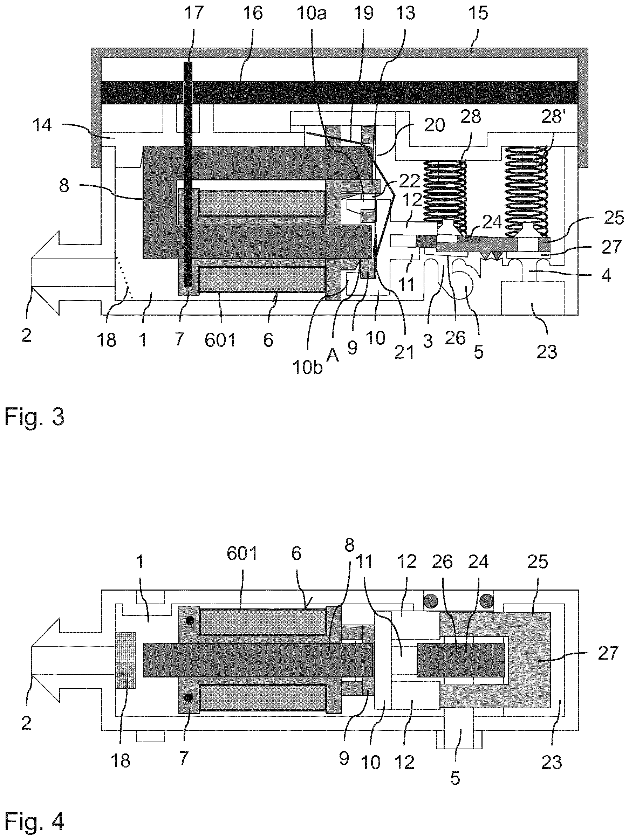

Mit dem Magnetventil der Fig. 1 bis Fig. 3 können drei Schaltstellungen durch unterschiedliche Bestromung der Magnetspule 6 mit gleicher Polarität realisiert werden. Fig. 1 zeigt dabei die Schaltstellung bei unbestromter Magnetspule, Fig. 2 die Schaltstellung bei einer Bestromung der Magnetspule mit einer mittleren Stromstärke und Fig. 3 die Schaltstellung bei einer Bestromung mit einer hohen Stromstärke. Bevor genauer auf die einzelnen Schaltstellungen sowie den Betätigungsmechanismus zum Öffnen und Schließen des Zuluftanschlusses 3 und des Abluftanschlusses 4 eingegangen wird, werden zunächst der Aufbau und die Wechselwirkung der anderen Komponenten des Magnetventils erläutert. Im Besonderen wird die Bewegung des Ankers 9 durch Bestromung der Spule 6 detailliert beschrieben.

Der Spulenkörper 7 umfasst eine Führungsnase 13, welche ein Verkippen der Drehachse A des Ankers 9 dadurch verhindert, dass die Führungsnase in der Öffnung 22 (siehe Fig. 5) geführt ist. Bei der Bestromung der Spule 6 wird eine Magnetkraft erzeugt, welche den Anker 9 hin zum Joch 8 zieht. Dabei überlappen die vier Kanten der oberen quadratischen Öffnung 20 mit dem oberen Ende des Jochs 8. Ebenso vergrößert sich eine entsprechende Überlappung von drei Kanten der unteren Öffnung 21 mit dem unteren Ende des Jochs 8.

In der gezeigten Magnetspule bleibt der Luftspalt L zwischen den Kanten der oberen quadratischen Öffnung 20 und dem Joch 8 sowie der Luftspalt L' zwischen den Kanten der unteren quadratischen Öffnung 21 und dem Joch 8 in Richtung der Drehung des Ankers unabhängig von der Größe der Überlappung zwischen Joch und Anker im Wesentlichen konstant. Dies ist nochmals in Fig. 5 verdeutlicht. Man erkennt hierbei insbesondere den Luftspalt L zwischen dem Rand der oberen Öffnung 20 und dem oberen Schenkel des Jochs 8 sowie den Luftspalt L' zwischen dem Rand der unteren Öffnung 21 und dem unteren Schenkel des Jochs 8. Zu beachten ist dabei, dass entlang der unteren Kante der Öffnung 21 kein Luftspalt existiert, da sich dort das Joch und der Anker direkt an einer Berührungslinie berühren. Entlang dieser Berührungslinie verläuft die Drehachse A des Ankers, wie bereits eingangs erwähnt wurde.

Gemäß Fig. 5 ist die Größe des Luftspalts L bzw. L' entlang der Kanten der Öffnung konstant. Dies muss jedoch nicht so realisiert sein. Entscheidend ist vielmehr, dass der durch die Luftspalte gebildete Abstand zwischen Anker 9 und Joch 8 in Drehrichtung des Ankers, d.h. entlang jeweiliger senkrecht zur Blattebene verlaufenden Linien, konstant bleibt. Demgegenüber kann die Größe des Luftspalts entlang des Umfangs der Öffnungen 20 und 21 ggf. variieren. Insbesondere können z.B. die linke und rechte Seite des Luftspalts L' auch leicht schräg nach unten verlaufen. Dadurch wird erreicht, dass der Anker im Bereich der Drehachse A zum Joch zentriert ist. Die Größe des Luftspalts an den übrigen Kanten liegt etwa bei 0,2 mm.

Durch den im Wesentlichen konstanten Luftspalt in Richtung der Drehung des Ankers 9 wird erreicht, dass die auf den Anker wirkende magnetische Kraft nur noch vom Strom und nicht davon abhängt, wie stark sich der Anker dem Joch genähert hat. Mit dem Magnetventil der Fig. 1 wird somit ein Proportionalventil geschaffen, dessen Magnetkraft bei konstanter Bestromung der Spule konstant ist. In dem Magnetventil der Fig. 1 ist dabei ferner eine Blattfeder 19 vorgesehen, welche entgegengesetzt zur Magnetkraft wirkt und somit eine Rückstellkraft erzeugt. Die Blattfeder ist im oberen Bereich am Spulenkörper 7 und im unteren Bereich an dem Anker 9 sowie dem Clip 10 befestigt. Die Rückstellkraft wird mit zunehmender Verdrehung des Ankers bei Bestromung der Spule immer größer, bis sie schließlich genauso groß wie die konstante Magnetkraft ist, deren Größe durch die Stromstärke der bestromten Spule gegeben ist. Der Aufbau der Blattfeder 19 wird weiter unten anhand von Fig. 6 näher erläutert.

Ebenso wird der Aufbau des Clips 10 weiter unten anhand von Fig. 7 näher erläutert.

Wie man aus Fig. 2 und Fig. 3 erkennt, führt die Bestromung der Spule zu einer Verdrehung des Ankers 9 um die Drehachse A. Die Bestromung der Wicklung 601 der Spule 6 erfolgt dabei über elektrische Pins 17, die sich durch eine Öffnung der Abdeckplatte 14 erstrecken und mit einem entsprechenden elektrischen Kontakt der Platine 16 verbunden sind. Die Öffnung in der Abdeckplatte ist abgedichtet, z.B. mittels Verklebung, Einpressen oder Einspritzen. Es tritt somit über diese Öffnung keine Luft aus der druckbeaufschlagten Luftkammer 1 aus. Aus Fig. 1 ist ferner ein Gitterfilter 18 ersichtlich, der das Eindringen von Partikeln aus der elastischen Luftblase vermeidet.

Aus der bereits oben erwähnten Fig. 5 ist ferner die Form der mittleren Öffnung 22 des Ankers 9 ersichtlich. Die Öffnung hat die Gestalt eines auf dem Kopf stehenden Buchstabens T, wobei in dem vertikalen Balken des Buchstabens T die Führungsnase 13 eingreift, welche das seitliche Verkippen des Ankers 9 verhindert. Demgegenüber dient der vertikale Balken des Buchstabens T zum Durchtritt einer oberen Rastnase 10a des Clips 10. Diese Rastnase ist sehr gut aus der weiter unten erläuterten Fig. 7 ersichtlich.

Aus Fig. 6 ist nochmals in Draufsicht die Blattfeder 19 ersichtlich, die in Fig. 1 im Schnitt dargestellt ist. Die Blattfeder besteht aus einem Metallblech, das an vier Stellen 19a geknickt ist. Am oberen Ende weist die Blattfeder eine T-Form auf. Dort erfolgt die Befestigung der Blattfeder am Spulenkörper 7. Innerhalb einer mittleren Öffnung der Blattfeder befindet sich ein vorstehender Lappen 19b mit einer Aussparung 19c. Im eingebauten Zustand der Blattfeder liegt der Lappen 19b an der Innenfläche des Clips 10 an, wobei die Rastnase 10a des Clips 10 über die Aussparung 19c geschoben wurde. In den Clip 10 mit dem darin eingesetzten Lappen 19b wird der untere Teil des Ankers 9 eingesetzt. Der Anker wird dabei über die Rastnase 10a sowie die beiden unteren Rastnasen 10b (siehe Fig. 7) am Clip 10 verrastet.

Über eine Verbiegung des Lappens 19b gegenüber dem Rest der Blattfeder 19 wird eine entsprechende Rückstellkraft erzeugt. Diese wird bei größerer Verdrehung des Ankers bei Bestromung der Spule umso größer, bis schließlich die Endposition erreicht ist, bei der die erzeugte Magnetkraft der Rückstellkraft der Blattfeder entspricht.

Mittels der Blattfeder 19 wird im eingebauten Zustand zum einen eine Kraft erzeugt, die den Anker 9 nach oben sowie in Richtung zur Magnetspule zieht, um die Drehachse A des Ankers 9 zu fixieren. Zum anderen erzeugt die Verformung der Blattfeder auf der Höhe der Drehachse A ein Drehmoment, welches den Anker von der Spule 6 wegkippt, so dass der Anker bei unbestromter Spule die erste Schaltstellung aus Fig. 1 einnimmt. Dieses Drehmoment wird durch die Verrastung der Blattfeder an dem oberen Ende des Spulenträgers 7 abgefangen. Wie bereits erwähnt, zeigt die Fig. 7 eine Draufsicht auf den Clip 10 aus Fig. 1. Man erkennt dabei die drei Vorsprünge 10a und 10b, mit denen der Anker in dem Clip verrastet wird.

Im Folgenden wird im Detail der Betätigungsmechanismus zum Öffnen und Schließen des Zuluftanschlusses 3 bzw. des Abluftanschlusses 4 erläutert. Dieser Betätigungsmechanismus umfasst neben den an dem Clip 10 ausgebildeten Vorsprüngen 11 und 12 eine erste Wippe 24 und eine zweite Wippe 25, die um unterschiedliche Drehachsen drehbar sind, wie schematisch in Fig. 1 durch nach unten weisende Keile an den entsprechenden Wippen angedeutet ist. An dem linken Arm der ersten Wippe 24 ist auf seiner Unterseite ein erstes Dichtelement 26 vorgesehen, welches zum Schließen des Zuluftanschlusses 3 dient. Analog ist auf der Unterseite des rechten Arms der zweiten Wippe 25 ein zweites Dichtelement 27 vorgesehen, welches zum Schließen des Abluftanschlusses 4 dient.

Darüber hinaus ist eine erste Spiralfeder 28 zwischen der Abdeckplatte 14 und dem linken Arm der ersten Wippe 24 positioniert. In gleicher Weise ist eine zweite Spiralfeder 28' zwischen der Abdeckplatte 14 und dem rechten Arm der zweiten Wippe 25 angeordnet. Die beiden Federn üben jeweils eine elastische Kraft auf die entsprechenden Arme der Wippen aus.

Der Aufbau der beiden Wippen 24 und 25 sowie der Vorsprünge 11 und 12 ist auch nochmals aus der teilweise geschnittenen Draufsicht der Fig. 4 ersichtlich. Der Schnitt in dieser Draufsicht erstreckt sich entlang einer durch die Wippen verlaufenden Ebene. Wie man aus Fig. 4 erkennt, ist die erste Wippe 24 rechteckig ausgebildet. Diese Wippe 24 wird von der U-förmig ausgestalteten zweiten Wippe 25 umgriffen, d.h. ein Großteil der Wippe 24 liegt zwischen den beiden Schenkeln der U-Form der Wippe 25. Die Wippe 24 wechselwirkt an ihrem linken Ende mit dem Vorsprung 11, der mittig aus dem Clip 10 vorsteht und sich an seinem rechten Ende über die Unterseite der Wippe 24 erstreckt. Demgegenüber wechselwirkt die Wippe 25 mit den beiden Vorsprüngen 12, die links und rechts an dem Clip 10 angeordnet sind. Die rechten Enden der beiden Vorsprünge 12 erstrecken sich über die Oberseite der entsprechenden Schenkel der U-Form der zweiten Wippe 25.

In der in Fig. 1 gezeigten Schaltstellung ist der elektromagnetische Aktor nicht bestromt. In dieser Schaltstellung drücken die oberen Vorsprünge 12 auf die Oberseite der zweiten Wippe 25. Die dabei ausgeübte Kraft ist größer als die elastische Kraft der Spiralfeder 28', so dass es zu einem Anheben des Dichtelements 27 und somit zu einem Öffnen der Abluftöffnung 4 kommt. Im Gegensatz hierzu wechselwirkt der Vorsprung 11 in der Schaltstellung der Fig. 1 nicht mit der ersten Wippe 24. Demzufolge wird die erste Wippe 24 über die elastische Kraft der Spiralfeder 28 nach unten gedrückt, wodurch die Zuluftöffnung 3 des Zuluftkanals 5 verschlossen ist. In der Schaltstellung der Fig. 1 wird somit ein Entlüften der an den Arbeitsanschluss 2 angeschlossenen Luftblase erreicht.

In der Schaltstellung der Fig. 2 wird die Magnetspule 6 mit einer mittleren Stromstärke bestromt, wie bereits oben erläutert wurde. Dies führt zu einer Drehung des Ankers 9 um die Achse A, bis die in Fig. 2 gezeigte mittlere Position erreicht ist. In dieser Position berühren die Vorsprünge 11 und 12 die entsprechenden Wippen mit geringer Kraft oder es findet keine Berührung zwischen wenigstens einer Wippe und zugehörigem Vorsprung statt. Demzufolge werden sowohl der Zuluftanschluss 3 als auch der Abluftanschluss 4 im Wesentlichen über die Kraft der beiden Federn 28 und 28' mittels der Dichtelemente 26 und 27 verschlossen.

Fig. 3 zeigt die dritte Schaltstellung des Magnetventils, bei der die Magnetspule 6 mit hoher Stromstärke bestromt wird. Dies hat zur Folge, dass der Anker 9 eine vertikale Position einnimmt, in welcher der Vorsprung 11 von unten gegen die Wippe 24 drückt, so dass das Dichtelement 26 angehoben wird und der Zuluftanschluss 3 freigegeben wird. Demgegenüber wechselwirken die Vorsprünge 12 nicht mit der Wippe 25, so dass die Abluftöffnung 4 mittels der Federkraft der Spiralfeder 28' im geschlossenen Zustand gehalten wird. In der dritten Schaltstellung der Fig. 3 erfolgt somit eine Befüllung der an den Arbeitsanschluss 2 angeschlossenen Luftblase.

Die anhand von Fig. 1 bis Fig. 4 erläuterte erste Ausführungsform der Erfindung hat den Vorteil, dass ein geringer Anker-Verstellweg mit gleichzeitig geringer Kraft bei mittlerer bzw. voller Ansteuerung des Ventils erforderlich ist. In einer bevorzugten Variante werden dabei als Spiralfedern 28 bzw. 28' Federn mit einer sehr flachen Kennlinie verwendet, d.h. Federn, welche eine geringe Änderung der Kraft pro Stellweg aufweisen. Ein weiterer Vorteil der ersten Ausführungsform besteht darin, dass sich der Zuluft- und Abluftanschluss in einem Bauteil (dem Gehäuse der Luftkammer) befinden und damit geringe Toleranzen zueinander aufweisen.

Die Wippen 24 und 25 der ersten Ausführungsform werden in einer bevorzugten Variante in der Mitte durch einen Steg bzw. einen Dorn geführt und gegen seitliche Verschiebung gesichert. Damit treffen die Dichtelemente stets an derselben Stelle auf die zugehörigen Düsensitze, wodurch eine verbesserte Dichtwirkung erreicht wird.

Ferner können in der ersten Ausführungsform über die Vorsprünge 11 und 12 einerseits sowie die Wippen 24 und 25 andererseits mittels des Hebelgesetzes unterschiedliche Kraft- bzw. Wegübersetzungen realisiert werden, um z.B. unterschiedliche Betätigungskräfte für den Zuluftanschluss und den Abluftanschluss darzustellen. Im Besonderen wird dabei für den Abluftanschluss eine niedrigere Betätigungskraft benötigt, da dieser durch den Druck der Luftblase (entspricht dem Druck in der Luftkammer) zusätzlich angepresst wird, wohingegen der Zuluftanschluss immer auch gegen einen Vordruck abdichten muss.

In einer weiteren Ausgestaltung der soeben beschriebenen Ausführungsform können die Wippen aus Federstahlblech gefertigt sein. Eine Aussteifung in den erforderlichen Bereichen kann dabei durch hochgewinkelte Randstreifen erfolgen. Ebenso können die Wippen und die zugehörigen Federn jeweils aus einem Teil gefertigt sein. Die Wippen 24 und 25 sind dann über die zugehörigen Federn 28 und 28' am Gehäuse der Luftkammer 1 fixiert. Hierdurch wird verhindert, dass sich die Dichtelemente 26 und 27 gegenüber den Düsensitzen des Zuluft- bzw. Abluftanschlusses bei mehrfacher Betätigung verschieben.

In der ersten Ausführungsform benötigt die mittlere Position des Ankers entsprechend der Fig. 2 eine deutlich geringere magnetische Kraft als die maximal ausgelenkte Position des Ankers entsprechend der Fig. 3. Die Verlustleistung des elektromagnetischen Aktors verringert sich entsprechend dieser Kraft. Die mittlere Ankerposition mit geringerer Verlustleistung wird typischerweise für einen längeren Zeitraum (z.B. 1 s bis 5 min) gehalten als die maximale Position des Ankers, die während einer vergleichsweisen kurzen Zeit des Befüllens der Luftblase benötigt wird (z.B. 0,5 s bis 5 s). Demzufolge wird durch das Magnetventil der ersten Ausführungsform nur wenig Verlustleistung generiert. Das Gleiche trifft auf die im Folgenden erläuterten Magnetventile der zweiten und dritten Ausführungsform zu.

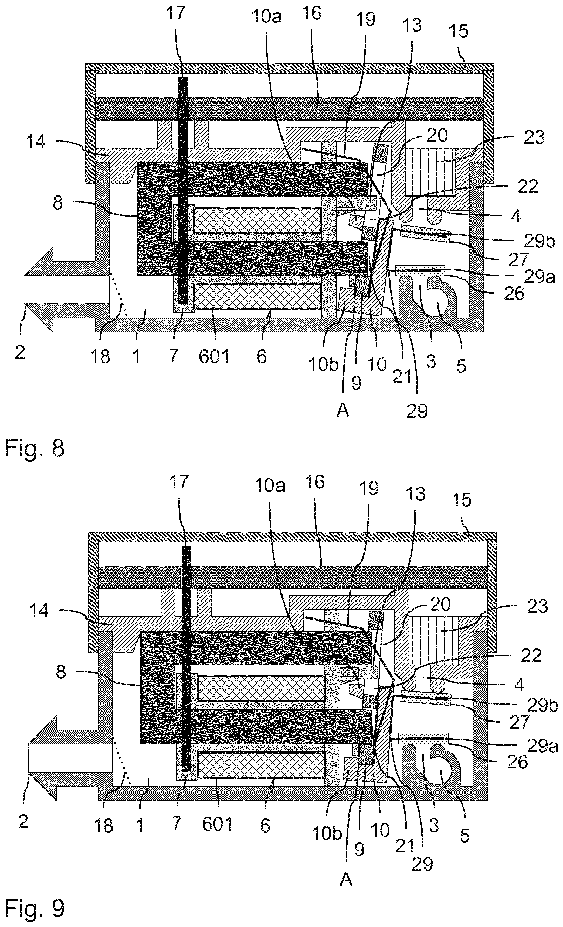

Nachfolgend werden anhand von Fig. 8 bis Fig. 13 eine zweite und eine dritte Ausführungsform des erfindungsgemäßen Magnetventils erläutert. Diese Ausführungsformen verwenden den gleichen Aufbau einer Magnetspule mit drehbarem Anker, so dass die Betätigung des Ankers nicht nochmals im Detail erläutert wird. Die zweite und die dritte Ausführungsform unterscheiden sich von der ersten Ausführungsform im Mechanismus der Betätigung des ersten und zweiten Dichtelements. Demzufolge wird in der nachfolgenden Beschreibung der Fig. 8 bis Fig. 13 hauptsächlich auf diesen Betätigungsmechanismus eingegangen.

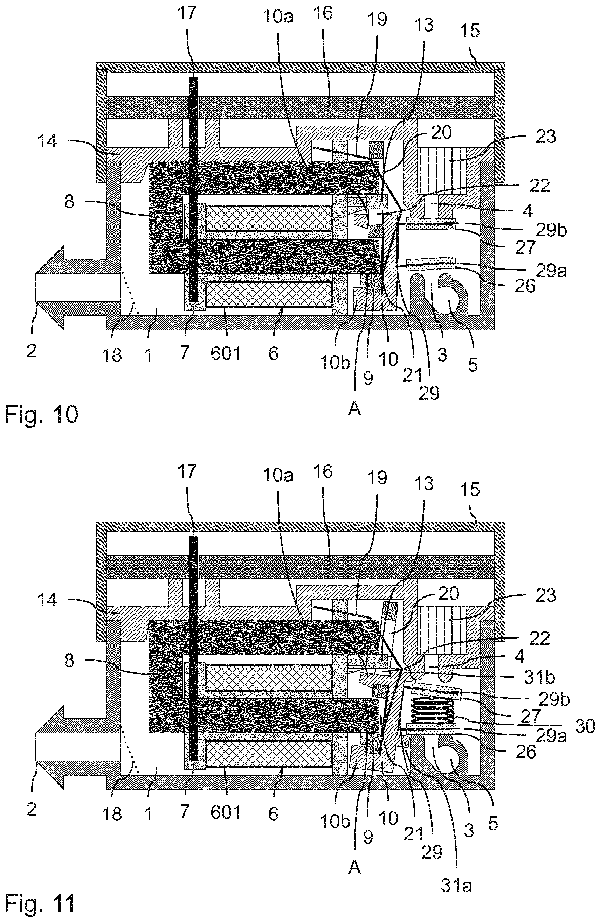

Fig. 8 bis Fig. 10 zeigen die zweite Ausführungsform eines erfindungsgemäßen Magnetventils. Fig. 8 entspricht wiederum der ersten Schaltstellung des Magnetventils bei unbestromter Magnetspule 6, Fig. 9 der zweiten Schaltstellung des Magnetventils bei Bestromung der Magnetspule mit mittlerer Stromstärke und Fig. 10 der dritten Schaltstellung des Magnetventils bei Bestromung der Magnetspule mit hoher Stromstärke. In dem Magnetventil der Figuren 8 bis 10 liegen der Zuluftanschluss 3 und der Abluftanschluss 4 nunmehr nicht mehr nebeneinander, sondern übereinander. Insbesondere befindet sich der Zuluftanschluss 3 am Boden der Luftkammer, wohingegen der Abluftanschluss 4 in der oberen Abdeckplatte 14 der Luftkammer vorgesehen ist. Als Betätigungsmechanismus wird nunmehr keine Wippe mehr genutzt, sondern eine U-förmige Blattfeder, die zwischen Zuluftanschluss 3 und Abluftanschluss 4 positioniert ist. Das Mittelteil dieser Blattfeder 29 ist an dem Clip 10 befestigt, der wiederum mit dem Anker 9 verbunden ist. An dem unteren Schenkel 29a der Blattfeder 29 befindet sich das Dichtelement 26 und an dem oberen Schenkel 29b der Blattfeder 29 ist das Dichtelement 27 vorgesehen. In der ersten Schaltstellung der Fig. 8 drückt der untere Schenkel 29a mittels der elastischen Kraft der Blattfeder gegen den Zuluftanschluss 3, so dass das Dichtelement 26 diesen Anschluss verschließt. Demgegenüber ist der Schenkel 29b und das entsprechende Dichtelement 27 von der Abluftöffnung 4 abgehoben, so dass diese in der Schaltstellung der Fig. 8 geöffnet ist.

In der zweiten Schaltstellung gemäß Fig. 9 befindet sich der Anker 9 in einer mittleren Position. In dieser Position werden die beiden Düsensitze der Anschlüsse 3 und 4 durch die jeweiligen Dichtelemente 26 und 27 abgedichtet. Die U-förmige Blattfeder presst beide Dichtelemente jeweils mit reduzierter Kraft an die Düsensitze. Diese reduzierte Kraft ist ausreichend, um während einer begrenzten Zeit (z.B. wenige Sekunden bis wenige Minuten) eine ausreichende Dichtigkeit zum Halten der Luft in der angeschlossenen Luftblase zu gewährleisten.

In der dritten Schaltstellung der Fig. 10, bei der die Magnetspule 6 mit einer hohen Stromstärke bestromt wird, befindet sich der Anker in der Position des maximalen Stellwegs. In dieser Position drückt nunmehr der obere Schenkel 29b mittels der elastischen Kraft der Feder gegen den Abluftanschluss 4, so dass dieser durch das Dichtelement 27 verschlossen ist. Demgegenüber ist der untere Schenkel kraftlos und von dem Zuluftanschluss 3 abgehoben, so dass dieser Zuluftanschluss geöffnet ist.

Die anhand von Fig. 8 bis Fig. 10 beschriebene Ausführungsform weist den Vorteil auf, dass der Betätigungsmechanismus sehr einfach realisiert ist und hierfür eine geringe Anzahl von Bauteilen benötigt wird. Der Zusammenbau des Magnetventils wird somit vereinfacht.

Als Material für die Dichtelemente 26 und 27 wird in der zweiten Ausführungsform vorzugsweise ein über den Funktionstemperaturbereich gleichmäßig elastisches Material verwendet (z.B. Silikon) . Hierdurch wird berücksichtigt, dass die Dichtelemente je nach Schaltstellung in leicht unterschiedlichen Winkeln auf die zugehörigen Düsensitze treffen können.

In einer Abwandlung der zweiten Ausführungsform werden die Längen der beiden Schenkel 29a und 29b der U-förmigen Blattfeder 29 unterschiedlich gewählt. Auf diese Weise lassen sich mittels des Hebelgesetzes unterschiedliche Kraft- bzw. Wegübersetzungen realisieren, so dass unterschiedliche Dichtkräfte für die Zuluft- und Abluftöffnung dargestellt werden können.

In einer vorteilhaften Variante der zweiten Ausführungsform können die Berührpunkte zwischen den Dichtelementen und den Düsensitzen in die Ebene der effektiven Drehachsen des Ankers bzw. der Enden der U-förmigen Blattfeder gelegt werden, um Gleitreibung bei der Bewegung zu minimieren.

Fig. 11 bis Fig. 13 zeigen eine dritte Ausführungsform des erfindungsgemäßen Magnetventils. Der Betätigungsmechanismus dieser Ausführungsform unterscheidet sich von dem Betätigungsmechanismus der Ausführungsform der Fig. 8 bis Fig. 10 darin, dass zusätzlich eine Spiralfeder 30 zwischen den beiden Schenkeln 29a und 29b der Blattfeder 29 und damit zwischen den Dichtelementen 26 und 27 angeordnet ist.

In der Ausführungsform der Fig. 11 bis Fig. 13 besitzt die U-förmige Blattfeder 29 nur eine vernachlässigbare Federsteifigkeit und wirkt somit im Wesentlichen wie zwei Gelenke in den am Clip 10 befindlichen Fußpunkten der Schenkel der Blattfeder. Die benötigte elastische Kraft wird nunmehr mittels der Spiralfeder 30 erzeugt, welche zwischen den beiden Schenkeln der Blattfeder 29 gestaucht wird. Darüber hinaus sind in der dritten Ausführungsform ein erster Anschlag 31a und ein zweiter Anschlag 31b auf der rechten Seite des Clips 10 vorgesehen. Über diese Anschläge werden die Dichtelemente von den Düsensitzen des Zuluftanschlusses und des Abluftanschlusses abgehoben, wie im Folgenden noch näher erläutert wird.

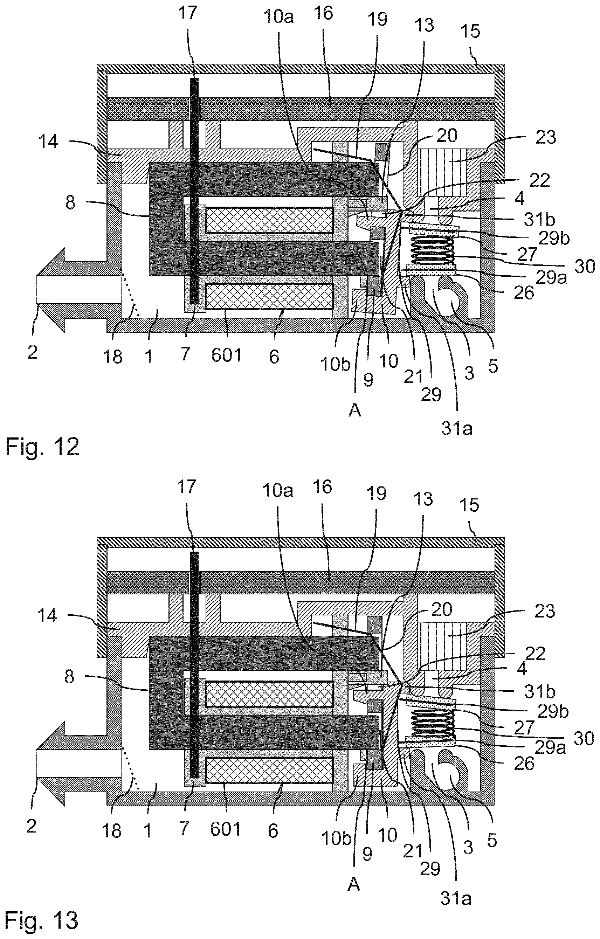

Fig. 11 zeigt wiederum die erste Schaltstellung des Magnetventils bei unbestromter Magnetspule 6. In dieser Schaltstellung wird das Dichtelement 26 über die gestauchte Feder 30 gegen den Düsensitz der Zuluftöffnung 3 gedrückt, so dass die Zuluftöffnung verschlossen ist. Demgegenüber ist die Abluftöffnung 4 geöffnet, was dadurch erreicht wird, dass der Anschlag 31b den Schenkel 29b nach unten drückt. In der in Fig. 12 gezeigten mittleren Schaltstellung (d.h. bei mittlerer Bestromung der Magnetspule) liegen beide Dichtelemente 26 und 27 auf den jeweiligen Düsensitzen auf und werden von der nunmehr weniger gestauchten Spiralfeder 30 mittels deren Federkraft angedrückt, so dass sowohl der Zuluftanschluss als auch der Abluftanschluss geschlossen sind. In der dritten Schaltstellung gemäß Fig. 13 (hohe Bestromung der Magnetspule) hebt der Anschlag 31b den unteren Schenkel 29a an, wodurch der Zuluftanschluss 3 freigegeben wird. Ferner wird die Stauchung der Spiralfeder 30 erhöht, wodurch das Dichtelement 27 fest gegen den Abluftanschluss 4 gedrückt wird.

Der Vorteil der soeben beschriebenen dritten Ausführungsform liegt in der besseren Ausnutzung der Betätigungskraft sowie in der besseren Beherrschbarkeit der Federtoleranzen einer Spiralfeder im Vergleich zu der Blattfeder aus Fig. 8 bis Fig. 10.

In einer Abwandlung der dritten Ausführungsform sind die Schenkel 29a und 29b nicht Bestandteil einer Blattfeder, sondern es handelt sich um entsprechende Fortsätze, die über ein Scharnier (insbesondere ein Filmscharnier) an dem Clip des Ankers angelenkt sind. Ansonsten sind die oben beschriebenen Optionen der zweiten Ausführungsform auch auf die dritte Ausführungsform anwendbar.

Die im Vorangegangenen beschriebenen Ausführungsformen der Erfindung weisen eine Reihe von Vorteilen auf. Insbesondere können verschiedene Schaltstellungen eines Magnetventils mit einer unipolaren Bestromung des Ventils erreicht werden. Beim Wechsel der Schaltstellungen wird über einen geeigneten Betätigungsmechanismus ferner erreicht, dass nur eines von zwei Dichtelementen bewegt wird, so dass drei Schaltstellungen mittels eines einzelnen elektromagnetischen Aktors realisiert werden können. Die Baugröße des Magnetventils kann hierdurch reduziert werden. Darüber hinaus kann das Magnetventil aufgrund einer Schaltstellung mit mittlerer Bestromung bei reduzierter Verlustleistung betrieben werden.

### Bezugszeichenliste

- 1: Luftkammer
- 100, 100': elektromagnetische Aktuatoren
- 2, 3, 4: Luftanschlüsse
- 5: Luftkanal
- 6: Magnetspule
- 601: Wicklung der Magnetspule
- 7: Spulenkörper der Magnetspule
- 8: Joch
- 9: Anker
- 10: Clip
- 10a, 10b: Rastnasen des Clips
- 11, 12: Vorsprünge des Clips
- 13: Führungsnase des Spulenkörpers
- 14: Abdeckplatte
- 15: Deckel
- 16: Platine
- 17: Pin
- 18: Gitterfilter
- 19: Blattfeder
- 19a: Knickstellen der Blattfeder
- 19b: Lappen der Blattfeder
- 19c: Aussparung am Lappen der Blattfeder
- 20, 21, 22: Öffnungen im Anker
- 23: Dämpfungselement
- 24, 25: Wippen
- 26, 27: Dichtelemente
- 28, 28': Spiralfedern
- 29: U-Förmige Blattfeder
- 29a, 29b: Schenkel der U-förmigen Blattfeder
- 30: Spiralfeder
- 31a, 31b: Anschläge
- L, L': Luftspalte
- A: Drehachse

## Patentansprüche

1. Pneumatisches Magnetventil, umfassend einen elektromagnetischen Aktor und eine Luftkammer (1), an der mehrere Luftanschlüsse (2, 3, 5) vorgesehen sind, welche über mehrere Schaltstellungen des magnetischen Aktors unter Zwischenschaltung der Luftkammer (1) verschaltbar sind, wobei
- der elektromagnetische Aktor drei unterschiedliche Schaltstellungen durch eine unipolare Bestromung des Aktors mit drei unterschiedlichen Stromstärken einnehmen kann, wobei in einer ersten Schaltstellung ein erstes Dichtelement (26) einen ersten Luftanschluss (3) verschließt und ein zweites Dichtelement (27) einen zweiten Luftanschluss (4) freigibt, wobei in einer zweiten Schaltstellung das erste Dichtelement (26) den ersten Luftanschluss (3) und das zweite Dichtelement (27) den zweiten Luftanschluss (4) verschließt und wobei in einer dritten Schaltstellung das erste Dichtelement (26) den ersten Luftanschluss (3) freigibt und das zweite Dichtelement (27) den zweiten Luftanschluss (4) verschließt;
zum Schließen und Öffnen des ersten und zweiten Luftanschlusses (3, 4) das erste und zweite Dichtelement (26, 27) durch den elektromagnetischen Aktor über einen Betätigungsmechanismus (11, 12, 24, 25, 28, 28'; 29, 30) bewegbar sind, wobei der Betätigungsmechanismus (11, 12, 24, 25, 28, 28'; 29, 30) derart ausgestaltet ist, dass beim Wechsel zwischen der ersten und zweiten Schaltstellung und beim Wechsel zwischen der zweiten und dritten Schaltstellung jeweils nur eines des ersten und zweiten Dichtelements (27, 28) bewegt wird, **dadurch gekennzeichnet, dass** der Betätigungsmechanismus (11, 12, 24, 25, 28, 28'; 29, 30) eine erste Wippe (24) umfasst, an der das erste Dichtelement (26) angebracht ist, sowie eine zweite Wippe (25), an der das zweite Dichtelement (27) angebracht ist, wobei die erste Wippe (25) zum Öffnen und Schließen des ersten Luftanschlusses (3) verkippbar ist und die zweite Wippe (25) zum Öffnen und Schließen des zweiten Luftanschlusses (4) verkippbar ist, wobei der Betätigungsmechanismus (11, 12, 24, 25, 28, 28'; 29, 30) derart ausgestaltet ist, dass beim Verkippen einer der ersten und zweiten Wippe (24, 25) die andere der ersten und zweiten Wippe (24, 25) nicht verkippt wird.

2. Magnetventil nach Anspruch 1, **dadurch gekennzeichnet, dass** der elektromagnetische Aktor einen Anker (9) aus weichmagnetischem Material umfasst, der durch Bestromung einer Magnetspule (6) bewegt wird und hierdurch auf den Betätigungsmechanismus (11, 12, 24, 25, 28, 28'; 29, 30) zum Schließen und Öffnen des ersten und zweiten Luftanschlusses (3, 4) einwirkt.

3. Magnetventil nach Anspruch 1 oder 2, **dadurch gekennzeichnet, dass** in der ersten Schaltstellung der elektromagnetische Aktor mit einer ersten Stromstärke und vorzugsweise mit der Stromstärke Null bestromt ist, in der zweiten Schaltstellung der elektromagnetische Aktor mit einer zweiten Stromstärke bestromt ist und in der dritten Schaltstellung der elektromagnetische Aktor mit einer dritten Stromstärke bestromt ist, wobei die dritte Stromstärke höher als die zweite Stromstärke und die zweite Stromstärke höher als die erste Stromstärke ist.

4. Magnetventil nach einem der vorhergehenden Ansprüche, **dadurch gekennzeichnet, dass** der erste Luftanschluss (3) ein Zuluftanschluss für die Luftkammer (1) ist und der zweite Luftanschluss (4) ein Abluftanschluss für die Luftkammer (1) ist oder umgekehrt.

5. Magnetventil nach einem der vorhergehenden Ansprüche, **dadurch gekennzeichnet, dass** das erste und zweite Dichtelement (26, 27) durch den Betätigungsmechanismus (11, 12, 24, 25, 28, 28'; 29, 30) um separate Kippachsen verkippbar sind.

6. Magnetventil nach einem der vorhergehenden Ansprüche, **dadurch gekennzeichnet, dass**
- beim Wechsel zwischen der ersten und zweiten Schaltstellung der Betätigungsmechanismus (11, 12, 24, 25, 28, 28'; 29, 30) ausschließlich die zweite Wippe (25) verkippt, während das erste Dichtelement (26) den ersten Luftanschluss (3) mittels einer auf die erste Wippe (24) wirkenden elastischen Kraft geschlossen hält;
- beim Wechsel zwischen der zweiten und dritten Schaltstellung der Betätigungsmechanismus (11, 12, 24, 25, 28, 28'; 29, 30) ausschließlich die erste Wippe (24) verkippt, während das zweite Dichtelement (27) den zweiten Luftanschluss (4) mittels einer auf die zweite Wippe (25) wirkenden elastischen Kraft geschlossen hält;
- in der zweiten Schaltstellung der Betätigungsmechanismus (11, 12, 24, 25, 28, 28'; 29, 30) eine Stellung derart einnimmt, dass sowohl das erste Dichtelement (26) als auch das zweite Dichtelement (27) den jeweiligen ersten und zweiten Luftanschluss (3, 4) mittels einer auf die erste Wippe (24) wirkenden elastischen Kraft und einer auf die zweite Wippe (25) wirkenden elastischen Kraft geschlossen hält.

7. Magnetventil nach Anspruch 6, **dadurch gekennzeichnet, dass** die elastischen Kräfte durch ein erstes elastisches Mittel (28) und ein zweites elastisches Mittel (28') erzeugt werden, wobei das erste elastische Mittel (28) die erste Wippe (24) mit einer elastischen Kraft hin zu dem geschlossenen Zustand des ersten Luftanschlusses (3) drückt und das zweite elastische Mittel (28') die zweiten Wippe (25) mit einer elastischen Kraft hin zu dem geschlossenen Zustand des zweiten Luftanschlusses (4) drückt.

8. Magnetventil nach Anspruch 6 oder 7, **dadurch gekennzeichnet, dass** der Betätigungsmechanismus (11, 12, 24, 25, 28, 28'; 29, 30) umfasst:
- zumindest einen ersten Vorsprung (11) zum Verkippen der ersten Wippe (24) mittels Kraftausübung auf ein Ende der ersten Wippe, um den ersten Luftanschluss (3) gegen die auf die erste Wippe (24) wirkende elastische Kraft zu öffnen, und
- zumindest einen zweite Vorsprung (12) zum Verkippen der zweiten Wippe (25) mittels Kraftausübung auf ein Ende der zweiten Wippe (25), um den zweiten Luftanschluss (4) gegen die auf die zweite Wippe (25) wirkende elastische Kraft zu öffnen.

9. Magnetventil nach einem der vorhergehenden Ansprüche, **dadurch gekennzeichnet, dass** der erste Luftanschluss (3) und der zweite Luftanschluss (4) einander gegenüber liegen und der Betätigungsmechanismus (11, 12, 24, 25, 28, 28'; 29, 30) einen ersten Schenkel (29a) mit darauf angeordnetem ersten Dichtelement (26) und einen zweiten Schenkel (29b) mit darauf angeordnetem zweiten Dichtelement (27) umfasst, wobei der erste und zweite Schenkel (29a, 29b) zwischen dem ersten und zweiten Luftanschluss (3, 4) angeordnet sind und durch den elektromagnetischen Aktor verkippbar sind, wobei der erste und zweite Schenkel (29a, 29b) mechanisch derart miteinander gekoppelt sind, dass
- in der ersten Schaltstellung das erste Dichtelement (26) mittels einer auf den ersten Schenkel (29a) wirkenden elastischen Kraft den ersten Luftanschluss (3) verschließt, wohingegen das zweite Dichtelement (27) den zweiten Luftanschluss (4) freigibt;
- in der zweiten Schaltstellung das erste Dichtelement (26) den ersten Luftanschluss (3) mittels einer auf den ersten Schenkel (29a) wirkenden elastischen Kraft verschließt und das zweite Dichtelement (27) den zweiten Luftanschluss (4) mittels einer auf den zweiten Schenkel (29b) wirkenden elastischen Kraft verschließt; und
- in der dritten Schaltstellung das erste Dichtelement (26) den ersten Luftanschluss (3) freigibt, wohingegen das zweite Dichtelement mittels einer auf den zweiten Schenkel (29b) wirkenden elastischen Kraft den zweiten Luftanschluss (4) verschließt.

10. Magnetventil nach Anspruch 9, **dadurch gekennzeichnet, dass** der Betätigungsmechanismus (11, 12, 24, 25, 28, 28'; 29, 30) eine U-förmige Blattfeder umfasst, deren Schenkel den ersten und zweiten Schenkel (29a, 29b) bilden und welche zumindest teilweise die elastischen Kräfte in der ersten bis dritten Schaltstellung erzeugt.

11. Magnetventil nach Anspruch 9 oder 10, **dadurch gekennzeichnet, dass** der Betätigungsmechanismus (11, 12, 24, 25, 28, 28'; 29, 30) ein Federelement (30) umfasst, das zwischen dem ersten und zweiten Schenkel (29a, 29b) positioniert ist und zumindest teilweise die elastischen Kräfte in der ersten bis dritten Schaltstellung erzeugt.

12. Magnetventil nach einem der Ansprüche 9 bis 11, **dadurch gekennzeichnet, dass** der Betätigungsmechanismus (11, 12, 24, 25, 28, 28'; 29, 30) einen ersten Anschlag (31a) umfasst, der das Verkippen des ersten Schenkels (29a) bewirkt, und/oder dass der Betätigungsmechanismus (11, 12, 24, 25, 28, 28'; 29, 30) einen zweiten Anschlag (31b) umfasst, der das Verkippen des zweiten Schenkels (29b) bewirkt.

13. Vorrichtung zur pneumatischen Verstellung eines Sitzes in einem Verkehrsmittel mit zumindest einer elastischen Luftblase sowie einem Magnetventil nach einem der vorhergehenden Ansprüche zum Befüllen und/oder Entleeren der zumindest einen Luftblase.

## Claims

1. Pneumatic solenoid valve, comprising an electromagnetic actuator and an air chamber (1) on which multiple air connectors (2, 3, 5) are provided which are interconnectable, with the interposition of the air chamber (1), by means of multiple switching positions of the magnetic actuator, wherein
- the electromagnetic actuator can assume three different switching positions by means of unipolar electrical energization of the actuator with three different electrical current intensities, wherein, in a first switching position, a first sealing element (26) closes a first air connector (3) and a second sealing element (27) opens up a second air connector (4), wherein, in a second switching position, the first sealing element (26) closes the first air connector (3) and the second sealing element (27) closes the second air connector (4), and wherein, in a third switching position, the first sealing element (26) opens up the first air connector (3) and the second sealing element (27) closes the second air connector (4);
for the closing and opening of the first and second air connectors (3, 4), the first and second sealing elements (26, 27) are movable by the electromagnetic actuator by means of an actuation mechanism (11, 12, 24, 25, 28, 28'; 29, 30), wherein the actuation mechanism (11, 12, 24, 25, 28, 28'; 29, 30) is designed such that, upon the change between the first and second switching positions and upon the change between the second and third switching positions, in each case only one out of the first and second sealing elements (27, 28) is moved, **characterized in that** the actuation mechanism (11, 12, 24, 25, 28, 28'; 29, 30) comprises a first rocker (24), to which the first sealing element (26) is attached, and a second rocker (25), to which the second sealing element (27) is attached, wherein the first rocker (25) is tiltable for the purposes of opening and closing the first air connector (3), and the second rocker (25) is tiltable for the purposes of opening and closing the second air connector (4), wherein the actuation mechanism (11, 12, 24, 25, 28, 28'; 29, 30) is designed such that, during the tilting of one out of the first and second rockers (24, 25), the other out of the first and second rockers (24, 25) is not tilted.

2. Solenoid valve according to Claim 1, **characterized in that** the electromagnetic actuator comprises an armature (9) composed of magnetically soft material, which armature is moved as a result of electrical energization of a magnet coil (6) and, as a result, acts on the actuation mechanism (11, 12, 24, 25, 28, 28'; 29, 30) for the closing and opening of the first and second air connectors (3, 4).

3. Solenoid valve according to Claim 1 or 2, **characterized in that**, in the first switching position, the electromagnetic actuator is electrically energized with a first current intensity, and preferably with the current intensity zero, in the second switching position, the electromagnetic actuator is electrically energized with a second current intensity, and in the third switching position, the electromagnetic actuator is electrically energized with a third current intensity, wherein the third current intensity is higher than the second current intensity and the second current intensity is higher than the first current intensity.

4. Solenoid valve according to one of the preceding claims, **characterized in that** the first air connector (3) is a feed air connector for the air chamber (1) and the second air connector (4) is an exhaust air connector for the air chamber (1), or vice versa.

5. Solenoid valve according to one of the preceding claims, **characterized in that** the first and second sealing elements (26, 27) can be tilted about separate tilting axes by means of the actuation mechanism (11, 12, 24, 25, 28, 28'; 29, 30).

6. Solenoid valve according to one of the preceding claims, **characterized in that**,
- upon the change between the first and second switching positions of the actuation mechanism (11, 12, 24, 25, 28, 28'; 29, 30), only the second rocker (25) is tilted, whereas the first sealing element (26) keeps the first air connector (3) closed by means of an elastic force acting on the first rocker (24);
- upon the change between the second and third switching positions of the actuation mechanism (11, 12, 24, 25, 28, 28'; 29, 30), only the first rocker (24) is tilted, whereas the second sealing element (27) keeps the second air connector (4) closed by means of an elastic force acting on the second rocker (25);
- in the second switching position, the actuation mechanism (11, 12, 24, 25, 28, 28'; 29, 30) assumes a position such that both the first sealing element (26) and the second sealing element (27) keep the respective first and second air connectors (3, 4) closed by means of an elastic force acting on the first rocker (24) and an elastic force acting on the second rocker (25).

7. Solenoid valve according to Claim 6, **characterized in that** the elastic forces are generated by a first elastic means (28) and a second elastic means (28'), wherein the first elastic means (28) pushes the first rocker (24) with an elastic force in the direction of the closed state of the first air connector (3), and the second elastic means (28') pushes the second rocker (25) with an elastic force in the direction of the closed state of the second air connector (4).

8. Solenoid valve according to Claim 6 or 7, **characterized in that** the actuation mechanism (11, 12, 24, 25, 28, 28'; 29, 30) comprises:
- at least one first projection (11) for tilting the first rocker (24), by exertion of force on one end of the first rocker, in order to open the first air connector (3) counter to the elastic force acting on the first rocker (24), and
- at least one second projection (12) for tilting the second rocker (25), by exertion of force on one end of the second rocker (25), in order to open the second air connector (4) counter to the elastic force acting on the second rocker (25).

9. Solenoid valve according to one of the preceding claims, **characterized in that** the first air connector (3) and the second air connector (4) are situated opposite one another and the actuation mechanism (11, 12, 24, 25, 28, 28'; 29, 30) comprises a first limb (29a) with a first sealing element (26) arranged thereon and a second limb (29b) with a second sealing element (27) arranged thereon, wherein the first and second limbs (29a, 29b) are arranged between the first and second air connectors (3, 4) and can be tilted by means of the electromagnetic actuator, wherein the first and second limbs (29a, 29b) are mechanically coupled to one another such that,
- in the first switching position, the first sealing element (26) closes the first air connector (3) by means of an elastic force acting on the first limb (29a), whereas the second sealing element (27) opens up the second air connector (4);
- in the second switching position, the first sealing element (26) closes the first air connector (3) by means of an elastic force acting on the first limb (29a), and the second sealing element (27) closes the second air connector (4) by means of an elastic force acting on the second limb (29b); and
- in the third switching position, the first sealing element (26) opens up the first air connector (3), whereas the second sealing element closes the second air connector (4) by means of an elastic force acting on the second limb (29b).

10. Solenoid valve according to Claim 9, **characterized in that** the actuation mechanism (11, 12, 24, 25, 28, 28'; 29, 30) comprises a U-shaped leaf spring, the limbs of which form the first and second limbs (29a, 29b) and which at least partially generates the elastic forces in the first to third switching positions.

11. Solenoid valve according to Claim 9 or 10, **characterized in that** the actuation mechanism (11, 12, 24, 25, 28, 28'; 29, 30) comprises a spring element (30) which is positioned between the first and second limbs (29a, 29b) and which at least partially generates the elastic forces in the first to third switching positions.

12. Solenoid valve according to one of Claims 9 to 11, **characterized in that** the actuation mechanism (11, 12, 24, 25, 28, 28'; 29, 30) comprises a first stop (31a), which effects the tilting of the first limb (29a), and/or **in that** the actuation mechanism (11, 12, 24, 25, 28, 28'; 29, 30) comprises a second stop (31b), which effects the tilting of the second limb (29b).

13. Device for the pneumatic adjustment of a seat in a means of transport, having at least one elastic air bladder and having a solenoid valve according to one of the preceding claims for the filling and/or emptying of the at least one air bladder.

## Revendications

1. Électrovanne pneumatique, comprenant un actionneur électromagnétique et une chambre à air (1) qui présente plusieurs raccordements d'air (2, 3, 5) pouvant être connectés par plusieurs positions de commutation de l'actionneur magnétique par interposition de la chambre à air (1), dans laquelle
- l'actionneur électromagnétique peut adopter trois positions de commutation différentes par une alimentation unipolaire de l'actionneur à trois intensités de courant différentes, dans laquelle, dans une première position de commutation, un premier élément d'étanchéité (26) ferme un premier raccordement d'air (3) et un deuxième élément d'étanchéité (27) dégage un deuxième raccordement d'air (4), dans laquelle, dans une deuxième position de commutation, le premier élément d'étanchéité (26) ferme le premier raccordement d'air (3) et le deuxième élément d'étanchéité (27) ferme le deuxième raccordement d'air (4) et dans laquelle, dans une troisième position de commutation, le premier élément d'étanchéité (26) dégage le premier raccordement d'air (3) et le deuxième élément d'étanchéité (27) ferme le deuxième raccordement d'air (4) ;
pour la fermeture et l'ouverture des premier et deuxième raccordements d'air (3, 4), les premier et deuxième éléments d'étanchéité (26, 27) peuvent être déplacés par l'actionneur magnétique par l'intermédiaire d'un mécanisme d'actionnement (11, 12, 24, 25, 28, 28' ; 29, 30), dans laquelle le mécanisme d'actionnement (11, 12, 24, 25, 28, 28' ; 29, 30) est conçu de telle manière que, lors du passage entre la première et la deuxième position de commutation et lors du passage entre la deuxième et la troisième position de commutation, un seul des premier et deuxième éléments d'étanchéité (2, 7, 2, 8) soit respectivement déplacé, **caractérisé en ce que** le mécanisme d'actionnement (11, 12, 24, 25, 28, 28' ; 29, 30) comprend une première bascule (24) sur laquelle est monté le premier élément d'étanchéité (26) et une deuxième bascule (25) sur laquelle est monté le deuxième élément d'étanchéité (27), dans laquelle la première bascule (25) peut être amenée à basculer pour ouvrir et fermer le premier raccordement d'air (3) et la deuxième bascule (25) peut être amenée à basculer pour ouvrir et fermer le deuxième raccordement d'air (4), dans laquelle le mécanisme d'actionnement (11, 12, 24, 25, 28, 28' ; 29, 30) est conçu de telle manière que, lors du basculement de l'une des première et deuxième bascules (24, 25), l'autre des première et deuxième bascules (24, 25) ne soit pas amenée à basculer.

2. Électrovanne selon la revendication 1, **caractérisée en ce que** l'actionneur électromagnétique comprend un induit (9) en matériau magnétique doux qui est déplacé par une alimentation d'une bobine magnétique (6) et agit ainsi sur le mécanisme d'actionnement (11, 12, 24, 25, 28; 29, 30) pour fermer et ouvrir les premier et deuxième raccordements d'air (3, 4).

3. Électrovanne selon la revendication 1 ou 2, **caractérisée en ce que**, à la première position de commutation, l'actionneur électromagnétique est alimenté à une première intensité de courant, de préférence à l'intensité de courant nulle, à la deuxième position de commutation, l'actionneur électromagnétique est alimenté à une deuxième intensité de courant et, à la troisième position de commutation, l'actionneur électromagnétique est alimenté à une troisième intensité de courant, dans laquelle la troisième intensité de courant est supérieure à la deuxième intensité de courant et la deuxième intensité de courant est supérieure à la première intensité de courant.

4. Électrovanne selon l'une des revendications précédentes, **caractérisée en ce que** le premier raccordement d'air (3) est un raccordement d'air d'alimentation pour la chambre à air (1) et le deuxième raccordement d'air (4) est un raccordement d'air d'évacuation pour la chambre à air (1) ou inversement.

5. Électrovanne selon l'une des revendications précédentes, **caractérisée en ce que** les premier et deuxième éléments d'étanchéité (26, 27) peuvent être amenés à basculer par le mécanisme d'actionnement (11, 12, 24, 25, 28, 28' ; 29, 30) autour d'axes de basculement séparés.

6. Électrovanne selon l'une des revendications précédentes, **caractérisée en ce que**
- lors du passage entre les première et deuxième positions de commutation, le mécanisme d'actionnement (11, 12, 24, 25, 28, 28' ; 29, 30) ne fait basculer que la deuxième bascule (25), alors que le premier élément d'étanchéité (26) maintient fermé le premier raccordement d'air (3) au moyen d'une force élastique agissant sur la première bascule (24) ;
- lors du passage entre les deuxième et troisième positions de commutation, le mécanisme d'actionnement (11, 12, 24, 25, 28, 28' ; 29, 30) ne fait basculer que la première bascule (24), alors que le deuxième élément d'étanchéité (27) maintient fermé le deuxième raccordement d'air (4) au moyen d'une force élastique agissant sur la deuxième bascule (25) ;
- dans la deuxième position de commutation, le mécanisme d'actionnement (11, 12, 24, 25, 28, 28' ; 29, 30) adopte une position telle que le premier élément d'étanchéité (26) ainsi que le deuxième élément d'étanchéité (27) maintiennent respectivement fermés les premier et deuxième raccordements d'air (3, 4) au moyen d'une force élastique agissant sur la première bascule (2, 4) et d'une force élastique agissant sur la deuxième bascule (25).

7. Électrovanne selon la revendication 6, **caractérisée en ce que** les forces élastiques sont générées par un premier moyen élastique (28) et un deuxième moyen élastique (28'), dans laquelle le premier moyen élastique (28) sollicite la première bascule (24) avec une force élastique vers l'état fermé du premier raccordement d'air (3) et le deuxième moyen élastique (28') sollicite la deuxième bascule (25) avec une force élastique vers l'état fermé du deuxième raccordement d'air (4).

8. Électrovanne selon la revendication 6 ou 7, **caractérisée en ce que** le mécanisme d'actionnement (11, 12, 24, 25, 28, 28' ; 29, 30) comprend :
- au moins une première protubérance (11) destinée à faire basculer la première bascule (24) en exerçant une force sur une extrémité de la première bascule pour ouvrir le premier raccordement d'air (3) en s'opposant à la force élastique exercée par la première bascule (2 4), et
- au moins une deuxième protubérance (12) destinée à faire basculer la deuxième bascule (25) en exerçant une force sur une extrémité de la deuxième bascule (25) pour ouvrir le deuxième raccordement d'air (4) en s'opposant à la force élastique agissant sur la deuxième bascule (25).

9. Électrovanne selon l'une des revendications précédentes, **caractérisée en ce que** le premier raccordement d'air (3) et le deuxième raccordement d'air (4) sont opposés l'un à l'autre et **en ce que** le mécanisme d'actionnement (11, 12, 24, 25, 28, 28' ; 29, 30) comporte une première branche (29a) sur laquelle est disposé un premier élément d'étanchéité (26) et une deuxième branche (29b) sur laquelle est disposé un deuxième élément d'étanchéité (27), dans laquelle les première et deuxième branches (29a, 29b) sont disposées entre les premier et deuxième raccordements d'air (3, 4) et peuvent être amenées à basculer par l'actionneur électromagnétique, dans laquelle les première et deuxième branches (29a, 29b) sont couplées mécaniquement l'une à l'autre de telle manière que
- dans la première position de commutation, le premier élément d'étanchéité (26) ferme le premier raccordement d'air (3) au moyen d'une force élastique agissant sur la première branche (29a), tandis que le deuxième élément d'étanchéité (27) dégage le deuxième raccordement d'air (4) ;
- dans la deuxième position de commutation, le premier élément d'étanchéité (26) ferme le premier raccordement d'air (3) au moyen d'une force élastique agissant sur la première branche (29a) et le deuxième élément d'étanchéité (27) ferme la deuxième branche (4) au moyen d'une force élastique agissant sur la deuxième branche (29b) ; et
- dans la troisième position de commutation, le premier élément d'étanchéité (26) dégage le premier raccordement d'air (3), tandis que le deuxième élément d'étanchéité ferme le deuxième raccordement d'air (4) au moyen d'une force élastique agissant sur la deuxième branche (29b).

10. Électrovanne selon la revendication 9, **caractérisée en ce que** le mécanisme d'actionnement (11, 12, 24, 25, 28, 28' ; 29, 30) comprend un ressort à lame en forme de U dont les branches forment les première et deuxième branches (29a, 29b) et qui génère au moins partiellement lesdites forces élastiques dans les première à troisième positions de commutation.

11. Électrovanne selon la revendication 9 ou 10, **caractérisée en ce que** le mécanisme d'actionnement (11, 12, 24, 25, 28, 28' ; 29, 30) comprend un élément élastique (30) positionné entre les première et deuxième branches (29a, 29b) et générant au moins partiellement lesdites forces élastiques dans les première à troisième positions de commutation.

12. Électrovanne selon l'une des revendications 9 à 11, **caractérisée en ce que** le mécanisme d'actionnement (11, 12, 24, 25, 28, 28' ; 29, 30) comprend une première butée (31a) qui fait basculer la première branche (29a) et/ou **en ce que** le mécanisme d'actionnement (11, 12, 24, 25, 28, 28' ; 29, 30) comprend une deuxième butée (31b) qui fait basculer la deuxième branche (29b) .

13. Dispositif de réglage pneumatique d'un siège dans un moyen de transport comportant au moins une poche à air élastique et une électrovanne selon l'une des revendications précédentes pour remplir et/ou vider ladite au moins une poche à air.
